# EUROPEAN PATENT APPLICATION

(11) **EP 2 704 034 A1**
(43) Date of publication of application: **05.03.2014**
(21) Application number: 13177664.3
(22) Date of filing: 23.07.2013
(51) Int. Cl.: G06F 17/30

(54) **Content search method based on cloud service, and system and terminal device supporting the same**

(30) Priority: 23.07.2012 KR 20120079811
(71) Applicant: Samsung Electronics Co., Ltd, Gyeonggi-do 443-742 (KR)
(72) Inventor: Kim, Jinyong, 443-742 Gyeonggi-do (KR); Shin, Youngsun, 443-742 Gyeonggi-do (KR)
(74) Representative: Gover, Richard Paul

(57) **Abstract**

The present invention relates to content search based on a cloud service, wherein a content search screen is displayed for providing a content search in a predefined format and the search request can be made, via the received content search screen, by manipulating the displayed contents in a more intuitive manner so that a user can access the desired item more efficiently.

## Description

### BACKGROUND OF THE INVENTION

### 1. Field of the Invention

The present invention relates to a cloud service that enables the user to easily and rapidly search desired content, and to a system and terminal device supporting the method.

### 2. Description of the Related Art

Mobile terminals provide various functions including a camera function enabling the user to store, manage, and search photographs captured by a camera module or received from an external source. The mobile terminal also stores phone numbers and enabling the user to easily find a specific phone number when placing a call.

Currently, cloud services that enable mobile terminals to share stored content are increasing. Mobile terminals subscribed to a cloud service may upload and download contents through communication channels. Thus far, the cloud services have been used as a means to handle simple tasks such as transferring content stored in one mobile terminal to another mobile terminal. Recently, as cloud services have become more sophisticated and user requirements have become more diverse, the amount and types of stored contents have enormously increased. In this regard, a simple content search function used in an existing cloud service may be not adequate in a more complex cloud environment. Hence, it is necessary to develop a more effective content search scheme to be effective in a cloud environment.

### SUMMARY OF THE INVENTION

The present invention has been made in view of the above problems and provides additional advantages, by providing a content search method that enables the user to easily and rapidly search desired content in a cloud service environment, and a system and terminal device supporting the method.

In accordance with an exemplary embodiment of the present invention, a content search system based on a cloud service includes: a cloud service equipment storing at least one content item; and at least one terminal in communication with the cloud service equipment for displaying a content search screen received from the cloud service equipment, and transmitting a search request to the cloud service equipment using the received content search screen, and, in response, displaying a search result received from the cloud service equipment according to a predetermined format.

In accordance with another exemplary embodiment of the present invention, a content search method based on a cloud service includes: establishing a connection by a terminal device to a cloud service equipment; receiving a content search screen supporting a search of stored content items from the cloud service equipment; transmitting a search term, via the content search screen, to the cloud service equipment; receiving a search result corresponding to the search term from the cloud service equipment; and displaying the search result according to a predefined format.

In accordance with another exemplary embodiment of the present invention, a terminal device supporting content search based on a cloud service includes: a communication unit to communicatively connect to a cloud service equipment to receive a content search screen; a display unit to output the received content search screen supporting a search of the content items stored in the cloud service equipment; an input unit to generate a search term on the received content search screen, and a control unit controlling a process of transmitting a search term to the cloud service equipment, receiving a search result corresponding to the search term therefrom, and outputting the search result on the display unit according to a predefined format.

### BRIEF DESCRIPTION OF THE DRAWINGS

The features and advantages of the present invention will be more apparent from the following detailed description in conjunction with the accompanying drawings, in which:
FIG. 1 illustrates a configuration of a content search system based on a cloud service according to an embodiment of the present invention;
FIG. 2 is a block diagram of a terminal device shown in FIG. 1;
FIG. 3 is a block diagram of cloud service equipment shown in FIG. 1;
FIG. 4 is a sequence diagram of a content search method based on a cloud service according to another embodiment of the present invention;
FIG. 5 illustrates interactions with a content search screen interface according to a first embodiment of the present invention;
FIG. 6 illustrates interactions with another content search screen interface according to the first embodiment of the present invention;
FIG. 7 illustrates interactions with a content search screen interface according to a second embodiment of the present invention; and
FIG. 8 illustrates interactions with another content search screen interface according to the second embodiment of the present invention.

### DETAILED DESCRIPTION

Hereinafter, exemplary embodiments of the present invention are described in detail with reference to the accompanying drawings. For the purposes of clarity and simplicity, detailed descriptions of well-known functions and structures incorporated herein may be omitted to avoid obscuring the subject matter of the present invention. Further, detailed descriptions of components having substantially the same configurations and functions may also be omitted. In the drawings, some elements are exaggerated, omitted or only outlined in brief, and thus may be not drawn to scale. Hence, the present invention is not limited by relative sizes of objects and intervals between objects in the drawings.

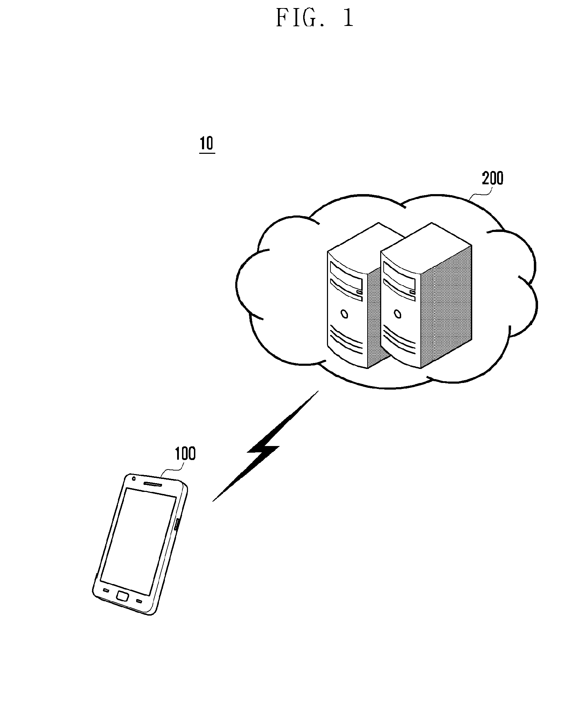

FIG. 1 illustrates a configuration of a content search system 10 based on a cloud service according to an embodiment of the present invention.

Referring to FIG. 1, the content search system 10 based on a cloud service may include at least one terminal device 100 and a cloud service equipment or server 200. The content search system 10 may further include networking facilities to support data exchanges between the terminal device 100 and the cloud service equipment 200 for content search, identification, upload and download functions. Here, the networking facilities may include composite network entities to support various communication schemes or modes of terminal devices 100 and the cloud service equipment 200.

Briefly, in the content search system 10 described above, the terminal device 100 connects to the cloud service equipment 200 and provides the user with various content service screens received from the cloud service equipment 200. In operation, a content search screen is provided to enable the user to perform content search in various ways. To this end, the terminal device 100 may connect to the cloud service equipment 200 and receive a content search screen from the cloud service equipment 200. Here, the provided content search screen may reflect conditions at the time of content upload to the cloud service equipment 200. That is, on the content search screen, the content items with various types and sizes may be arranged according to user preferences or selection. The content search screen may reflect relationships between locations where content items uploaded by the terminal device 100 are stored or moved. For example, on the content search screen that is output by the cloud service equipment 200 to the terminal device 100, various types of content items may be arranged at different positions on a fixed-size board. Here, on the content search screen, some content items may or may not be arranged so as to overlap each other according to design or user settings.

The terminal device 100 may support content search in a predefined manner on the content search screen. For example, to support content search, the terminal device 100 may provide a search input setting in addition to the content search screen. The search input setting may support content search based on a completed search word (or search term), content search based on a part of an incomplete search word being input, and content search based on input metadata of arranged content items. Alternatively, the terminal device 100 may separately operate the content search screen provided by the cloud service equipment 200 and the search input setting. That is, the terminal device 100 may output the search input setting (a layer provided by the terminal device 100) as an overlay on the content search screen (a layer provided by the cloud service equipment 200). The terminal device 100 may transmit search input entered on the search input setting to the cloud service equipment 200, which in turn cases the cloud service equipment 200 to perform content search based on the search input. In this case, as elements of the content search screen do not change until content search is actually performed, data transmission for updating the content search screen is suppressed. That is, data transmission between the terminal device 100 and the cloud service equipment 200 is performed only when actually needed for content search, optimizing data traffic. Various content search functions are described in detail later with reference to the drawings.

The cloud service equipment 200 may grant an access to a terminal device 100 for storing and accessing the requested content by the terminal device 100. To control access, the cloud service equipment 200 stores and manages authentication information usable to identify and verify individual subscribed terminal devices. In particular, to support content search of the present invention, the cloud service equipment 200 may provide a content search screen according to predefined format and provide the content search screen to the terminal device 100. Together with the content search screen, the cloud service equipment 200 may provide information on content items to be included in the content search screen, for example, information on shapes, colors and positions (on a board) at the time of display on the content search screen. The cloud service equipment 200 may further provide the terminal device 100 with information regarding how to rearrange content items displayed on the content search screen when search input is entered, how to mark positions of content items corresponding to the search input so that the displayed contents are distinguishable from each other, and display details of found content items.

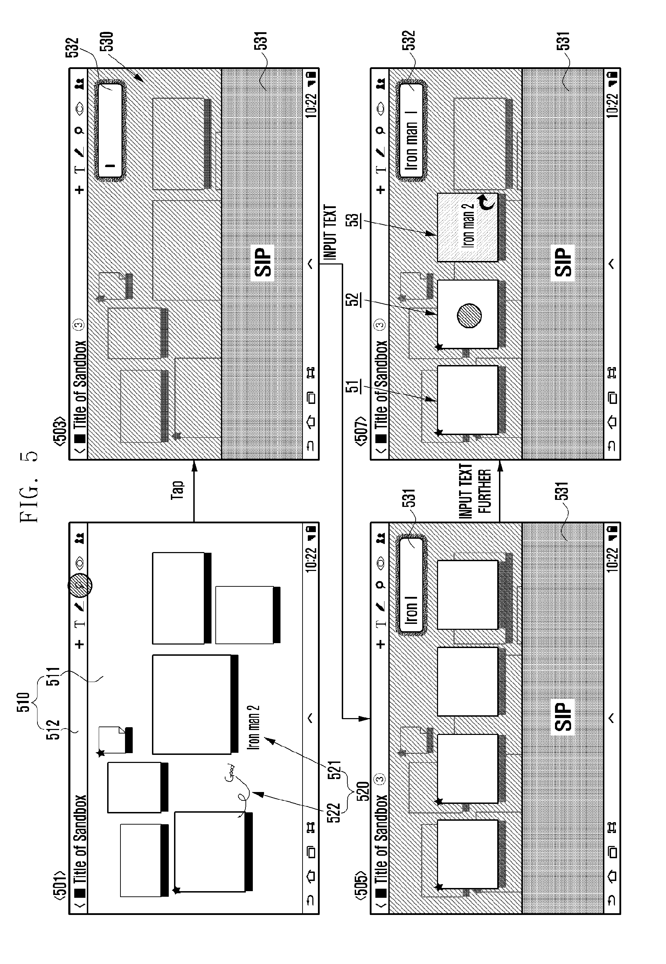

As described above, the content search system 10 based on a cloud service enables a user to conduct an effective content search in various ways in a cloud service environment. In particular, content search may be conducted on the basis of metadata of given content items, a completed search term, and a part of an input search term. As a result, the user may easily and rapidly perform content search according to various options in a cloud service environment. A detailed description of the operation steps to perform the search is explained later with reference to FIGs 5 through 8.

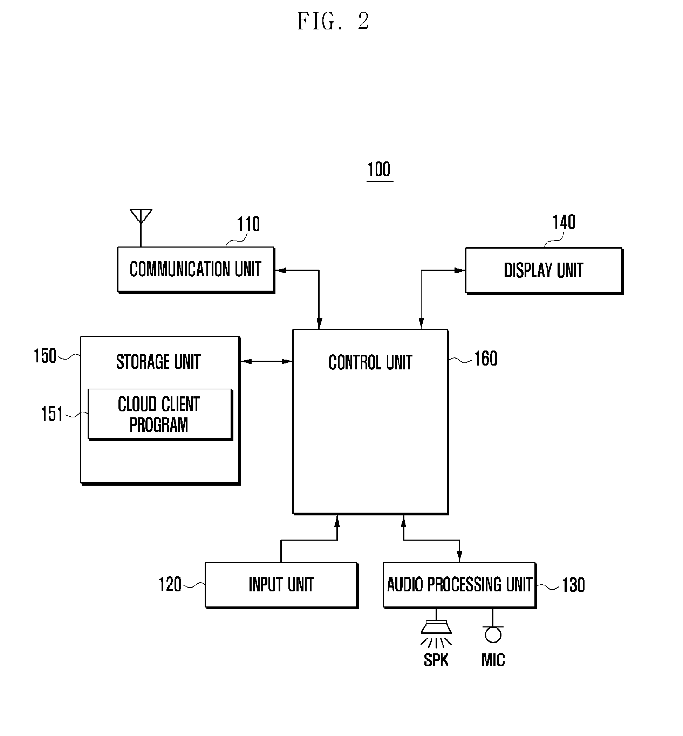

FIG. 2 is a block diagram of the terminal device 100 shown in FIG. 1.

Referring to FIG. 2, the terminal device 100 may include a communication unit 110, an input unit 120, an audio processing unit 130, a display unit 140, a storage unit 150, and a control unit 160.

The terminal device 100 having the above configuration connects to the cloud service equipment 200 through the communication unit 110, receives a content search screen enabling uploaded content search therefrom, and outputs the content search screen on the display unit 140. Here, the terminal device 100 may output the content search screen (provided and updated by the cloud service equipment 200) and a search input setting from the user as an integrated window or as separate layers. Further, the content search screen and the search input setting may be displayed as an integrated entity or as separate entities according to search characteristics. The terminal device 100 enables the user to conduct a search for desired content items uploaded on the cloud service equipment 200 using various search options. In particular, the terminal device 100 enables the user to perform content search in a simple manner by use of screen elements displayed on the content search screen and the search input setting without entering a search word.

To this end, the communication unit 110 supports communication for the terminal device 100. When the terminal device 100 supports mobile communication, the communication unit 110 may include a mobile communication module. In particular, to establish a communication channel to the cloud service equipment 200 on a network such as the Internet, the communication unit 110 may include a communication module that is connectable directly to the Internet or connectable to a different network linked with the Internet. The communication unit 110 may support transmission and reception of authentication related data for access to the cloud service equipment 200, reception of screen elements constituting a content search screen, transmission of search input data, and reception of search result data corresponding to the search input.

The input unit 120 is configured to generate various input signals necessary for operation of the terminal device 100. The input unit 120 may include various input means such as a keyboard, a keypad and key buttons according to compatibility with the terminal device 100. When the display unit 140 is a touchscreen, the input unit 120 may be realized using a QWERTY key map, Dvorak key map, 3*4 key map, and 5*4 key map, which are displayable as a virtual touch map on the display unit 140.

In particular, to support content search, the input unit 120 may generate an input signal for connecting to the cloud service equipment 200, an input signal for entering authentication information, and an input signal for entering content search input. The generated input signals are sent to the control unit 160. The input signal for content search input may include a key input signal for entering a search word to find the desired content items and an input signal for selecting content items displayed on the content search screen and moving the selected content items to a search input region. Here, the input signal for selecting and moving displayed content items may correspond to one of various touch events.

The audio processing unit 130 may output various audio data during operation of the terminal device 100, audio data produced by the playback of an audio file stored in the storage unit 150, and audio data received from the outside. The audio processing unit 130 may also collect audio data. To this end, the audio processing unit 130 may include a speaker SPK and a microphone MIC. In particular, the audio processing unit 130 may output various audio data related to manipulation of a content search screen provided by the cloud service equipment 200. The audio processing unit 130 may output sound notifications or sound effects for input signals to examine content items on the content search screen and to view detailed information on a selected content item according to audio data set at the time when the content search screen is constructed by the cloud service equipment 200. When the search input setting is not integrated with the content search screen, the audio processing unit 130 may output sound notifications or sound effects for input signals generated in the search input setting according to audio data set by the terminal device 100. When the search input setting is integrated with the content search screen, the audio processing unit 130 may output audio data provided by the cloud service equipment 200 or the terminal device 100 according to the agent of screen integration.

The display unit 140 is configured to output various screen interfaces needed for operation of the terminal device 100. For example, the display unit 140 outputs an idle screen, menu screen and the like needed for operation of the terminal device 100. The display unit 140 may be composed of a touch panel and a display panel, and may be used as an input means generating various touch events through the touch panel. The display unit 140 may output various screen interfaces to support content search of the present invention.

For example, when content search screen data is received from the cloud service equipment 200, the display unit 140 may output a corresponding content search screen, which is managed by the cloud service equipment 200. The display unit 140 may output a search input setting supporting content search on the content search screen. Here, the search input setting may be provided by the cloud service equipment 200 or the terminal device 100 according to design. When a search result corresponding to search input on the search input setting is received from the cloud service equipment 200, the display unit 140 may apply the search result to the content search screen or output the same on a separate screen acting as a layer. Various screen interfaces output on the display unit 140 are described in more detail later with reference to the drawings with reference to FIGs. 5 through 8.

The storage unit 150 may store an operating system needed for operation of the terminal device 100, and data, application programs and algorithms necessary to realize various user functions. In particular, the storage unit 150 may store a cloud client program 151 to support content search based on a cloud service. The storage unit 150 may store content items downloaded from the cloud service equipment 200, and temporarily store information regarding detailed viewing of selected content items or metadata thereof. That is, the storage unit 150 may temporarily or semi-permanently store information on screen elements constituting the content search screen.

The cloud client program 151 may include a routine for connecting to the cloud service equipment 200, a routine for receiving content search screen data from the cloud service equipment 200, and a routine for uploading and downloading content to and from the cloud service equipment 200. In particular, the cloud client program 151 may include a search routine for searching for desired content items according to various options while the content search screen is being displayed. The search routine may support content search on the basis of a completed search word, a part of an input search word, and metadata of content items displayed on the content search screen. The cloud client program 151 may include a routine for arranging a search input setting as an integrated entity or as a separate entity on the content search screen provided by the cloud service equipment 200, and a routine for applying search results received from the cloud service equipment 200 to the content search screen.

The control unit 160 controls signal processing and operations related to data delivery, storage and removal needed for operation of the terminal device 100. In particular, the control unit 160 supports content search based on a cloud service according to an embodiment of the present invention. More specifically, in response to generation of an input signal requesting access to the cloud service equipment 200 from the input unit 120 or display unit 140 via an input means, the control unit 160 may control an operation to obtain address information of the cloud service equipment 200 and to conduct signal processing for access thereto. Here, the control unit 160 may control the display unit 140 to output a menu entry or icon widget for accessing the cloud service equipment 200.

Upon establishing a connection to the cloud service equipment 200, the control unit 160 may control the display unit 140 to output a content search screen on the basis of content search screen data received from the cloud service equipment 200. The control unit 160 may control an operation to output a search input setting on the content search screen in response to generation of an input signal for content search or by default. Here, the control unit 160 may provide one or more search input options according to user settings or preset scheduling information. For example, the control unit 160 may perform screen composition so that the search input setting supports at least one search input option among use of a completed search term, use of a part of an input search term, and use of images or icons of content items displayed on the content search screen.

As described above, the search input setting may be output as a separate layer on the content search screen or output as a part of the content search screen (integrated into the content search screen).

The control unit 160 may control an operation to send search input entered on the search input setting the cloud service equipment 200, receive corresponding search results therefrom, and output the search results on the display unit 140. Here, the control unit 160 may control an operation to output the search results according to a preset format or output the same in separate screens according to search input options. Alternatively, the control unit 160 may receive search handling screen data from the cloud service equipment 200 and control the display unit 140 to output a corresponding search handling screen.

In a state in which the search input option of the search input setting indicates use of content images or icons and if the user places a selected content item in a preset search input region by making a touch gesture, the control unit 160 may collect metadata of the selected content item, and then send a search request for finding all content items related to the collected metadata to the cloud service equipment 200. When a corresponding search result is received from the cloud service equipment 200, the control unit 160 may output content items related to the metadata in a preset format. Here, the control unit 160 may control an operation to display the search result (i.e. content items related to metadata) according to search handling screen rules of the cloud service equipment 200, those of the terminal device 100, user settings, or default settings.

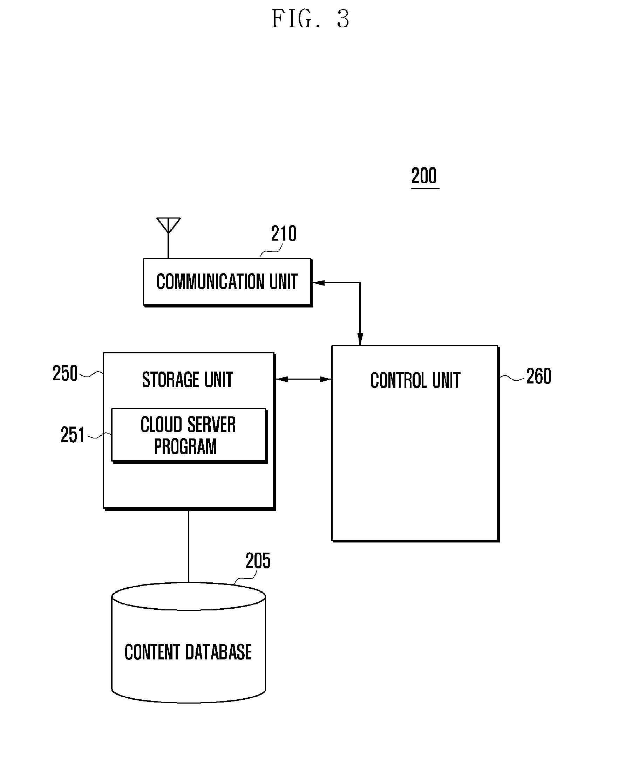

FIG. 3 is a block diagram of the cloud service equipment 200 shown in FIG. 1.

Referring to FIG. 3, the cloud service equipment 200 may include a communication unit 210, a storage unit 250, and a control unit 260. The cloud service equipment 200 may further include a content database 205 to support cloud services. Note that the content database 205 may be configured as an internal entity of the storage unit 250 or as an external entity thereof. The content database 205 may store content items uploaded by users, memos written in the cloud service environment, and metadata of each content item.

The communication unit 210 establishes a communication channel to a terminal device 100 to support data transmission for a cloud service. Upon connection with the terminal device 100, the communication unit 210 sends content search screen data containing content items stored in the cloud service equipment 200 to the terminal device 100. When a search request for specific content is received from the terminal device 100, the communication unit 210 forwards the search request to the control unit 260 and may send a corresponding search result produced by the control unit 260 to the terminal device 100.

The storage unit 250 may store an operating system for operation of the cloud service equipment 200 and various programs needed to provide cloud services. In particular, the storage unit 250 may store a cloud server program 251 in correspondence with the cloud client program 151 of the terminal device 100.

The cloud server program 251 may include a routine for connection with a terminal device 100, a routine for authentication of the terminal device 100, a routine for providing a content search screen, a routine for conducting a search based on given search input, and a routine for providing a search result. In particular, the cloud server program 251 may include a routine for composing a content search screen by arranging content images or icons having various shapes and/or colors in a preset canvas region according to a user request. The cloud server program 251 may include a routine for conducting content search according to various search input signals from the terminal device 100. The cloud server program 251 is loaded on the control unit 260 at the time of activation of the cloud service equipment 200 and supports cloud services, in particular, content search based on a cloud service.

The control unit 260 may control signal processing and distribution, and data update and deletion necessary for operation of the cloud service equipment 200. In particular, the control unit 260 may control performance of a search operation according to search terms received from the terminal device 100, such as a completed search word, a part of a search word, and a content-based search word. For example, when a completed search word is received, the control unit 260 finds content items corresponding to the search word and creates a list of the corresponding content items, and may provide a visual effect so that the user may distinguish positions of the corresponding content items from other content items on the content search screen, or may provide an indication so that the corresponding content items are output as a layer separate from the content search screen.

Whenever a portion of a search word is received, the control unit 260 may generate a partial search result and compose a partial search handling screen to be sent to the terminal device 100. Thereafter, when the search word is completed, the control unit 260 may provide multiple partial search handling screens to the terminal device 100.

When a content-based search word is received (i.e. when the user places a selected content item in a preset search input region), the control unit 260 may extract metadata of the content item and find content items related to the extracted metadata. The control unit 160 composes a search handling screen so that it is merged to the content search screen or be output as a separate layer according to a preset option, and sends the search handling screen to the terminal device 100.

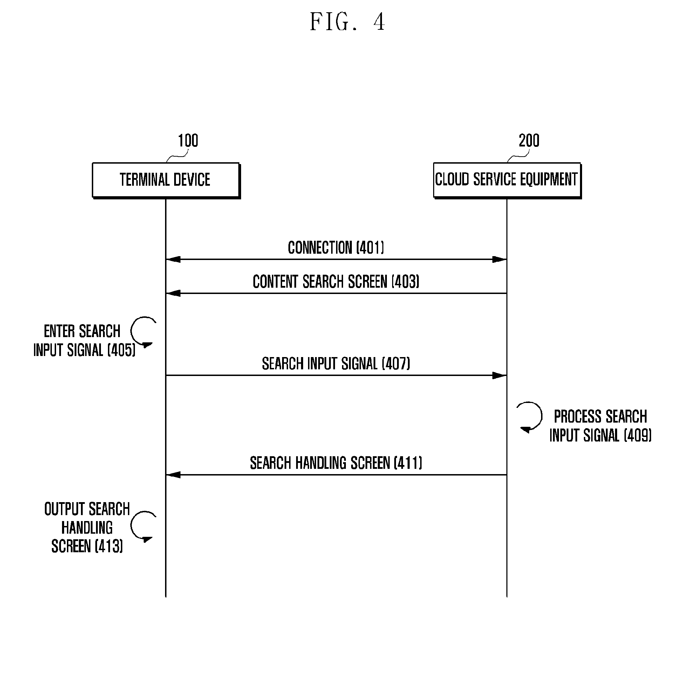

FIG. 4 is a sequence diagram of a content search method based on a cloud service according to another embodiment of the present invention.

Referring to FIG. 4, in the content search method based on a cloud service, a terminal device 100 connects to the cloud service equipment 200 (401). Here, the terminal device 100 may send a connection request using address information of the cloud service equipment 200. In response, the cloud service equipment 200 may send a request for authentication information. The terminal device 100 may send registered authentication information. The cloud service equipment 200 may accept the connection request of the terminal device 100 when the received authentication information matches pre-registered authentication information.

The cloud service equipment 200 sends a content search screen to the terminal device 100 (403). Here, the content search screen sent by the cloud service equipment 200 may reflect content states at the time when information stored in the cloud service equipment 200 was last updated by the terminal device 100, or may reflect content states at the time when a cloud service provided by the cloud service equipment 200 was last used by the terminal device 100. More specifically, in the content search screen provided by the cloud service equipment 200, content items may be represented as content images or icons having shapes or colors according to distinguishable properties of the content items and be arranged in a given region. For example, the content search screen may be composed so that photographs, text items and audio items are represented in different shapes or colors and are located in different regions. The content search screen may be composed so that content items uploaded by different terminal devices or users are represented in different shapes or colors and are located in different regions. The content search screen may be composed so that content items are represented in different shapes or colors according to content attributes such as size, upload time, download count, search count and comment. The content search screen may contain memos entered thereat as a content item. When content search screen data is received from the cloud service equipment 200, the terminal device 100 displays the corresponding content search screen on the display unit 140. In addition to the content search screen, the terminal device 100 may provide a search input setting to support a search for content items stored in the cloud service equipment 200. To search for the desired content stored in the cloud service equipment 200, the user may generate a search input signal for using the search input setting (405). Here, as described earlier, the search input signal may correspond to a completed search word, a portion of an input search word, or movement of a content item to a search input region.

When a search input signal is generated, the terminal device 100 sends a message containing the search input signal and search input setting information to the cloud service equipment 200 (407). Upon reception of a message containing a search input signal, the cloud service equipment 200 extracts the search input signal from the received message. The cloud service equipment 200 may also extract search input setting information from the received message to determine how to conduct content search using the extracted search input signal. Thereafter, the cloud service equipment 200 performs content search on the basis of the search input signal and search input setting information (409). That is, when the search input setting indicates use of a completed search word, the cloud service equipment 200 may find content items containing the search word or indicated by the search word and determine the found content items as a search result. When the search input setting indicates use of a partial search word, the cloud service equipment 200 may perform a search using a partial search word delivered in real time or at regular intervals or upon generation of an event and then accumulate partial search results as a full search result. When the search input setting indicates use of a content-based search word, the cloud service equipment 200 may obtain metadata of the indicated content item and search for content items related to the obtained metadata at a given level or more.

The cloud service equipment 200 composes a search handling screen using the outcome of processing the search input signal and sends the search handling screen to the terminal device 100 (411). Here, the search handling screen may be generated according to user settings, for example, by applying the search result to the content search screen or by outputting the search result as a separate layer on the content search screen.

Upon reception of the search handling screen, the terminal device 100 outputs the search handling screen on the display unit 140 (413). Here, according to user settings, the terminal device 100 may output one screen by merging the search handling screen into the content search screen or output the search handling screen as a separate layer on the content search screen.

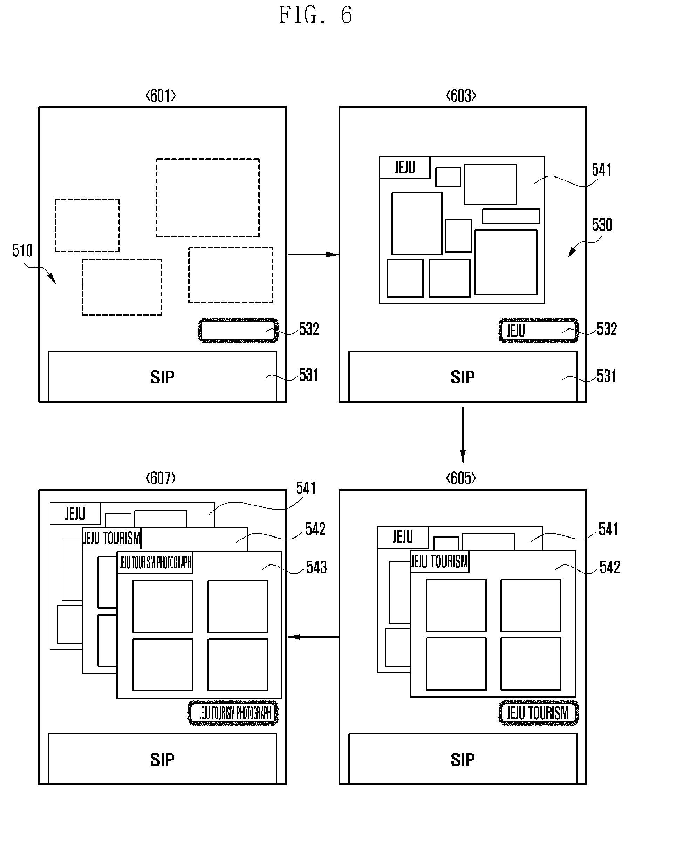

FIG. 5 is screen representations illustrating content search according to a first embodiment of the present invention, and FIG. 6 is screen representations illustrating another content search according to the first embodiment.

Referring to FIG. 5, after connecting to the cloud service equipment 200 according to user control, the terminal device 100 may output a content search screen 510 provided by the cloud service equipment 200 as indicated by reference numeral 501. In the content search screen 510, one or more content items are arranged at pre-assigned positions. The content search screen 510 may include a canvas region 511 used to accommodate content items and a menu region 512 used to provide various menu entries for content search.

Images representing content items output on the canvas region 511 may differ according to properties or display times of the content items. Memo items 520 may also be displayed at portions of the canvas region 511. Memo items 520 in the canvas region 511 may be created by a terminal device connecting to the cloud service equipment 200 or created by the cloud service equipment 200. For example, the first memo item 521 may contain information common to attributes of content items arranged in a section of the canvas region 511 such as content names or tags in metadata. The control unit 260 of the cloud service equipment 200 or a user thereof may create a memo item like the first memo item 521 to characterize a section of the canvas region 511 by attributes common to content items arranged within the section. Hence, when uploading a number of content items to the cloud service equipment 200, users may place the content items in predefined sections in consideration of attributes of the content items.

The second memo item 522 is created to record information on a particular content item. To this end, a user using a content item stored in the cloud service equipment 200 may create a memo item like the second memo item 522 to attach some information such as an opinion, description and notification to the content item. The cloud service equipment 200 may treat memo items like the memo items 520 as searchable content. Using the personal memo, comments or note, a user may find only content items associated with memo items containing the word "good".

When the user selects an entry for content search in the menu region 512, the terminal device 100 may output a first search input setting 530 on the display unit 140 as indicated by reference numeral 503. Here, the first search input setting 530 may be provided by the cloud service equipment 200 or be composed by the terminal device 100 as a separate layer on the content search screen 510 provided by the cloud service equipment 200. The first search input setting 530 may include a SIP (simple input panel) region 531 displaying various key maps to enter a search word, and an output region 532 displaying a search word entered in the SIP region 531. As indicated by reference numeral 503, the first search input setting 530 may be displayed translucently on the content search screen 510. The SIP region 531 may be composed of at least one key map among various key maps supported by the terminal device 100.

When the user enters a search word on the SIP region 531, the entered search word may be output in the output region 532 as indicated by reference numeral 505. Here, reference numeral 505 indicates a state in which the user entered "iron" through the SIP region 531. When a part of a search word ("iron") is entered, the terminal device 100 may transmit the partial search word to the cloud service equipment 200. Then, the cloud service equipment 200 may select content items related with the partial search word "iron" and output a list of the selected content items in a fixed region of the first search input setting 530 as indicated by reference numeral 505. Here, reference numeral 505 indicates that four content items are related with the search word "iron".

The user may continue search word entry through the SIP region 531. For example, when the user enters "iron man" as a complete search term, the search term may be output in the output region 532 as indicated by reference numeral 507. Here, a search word or term entered through the SIP region 531 may be sent to the cloud service equipment 200; and the cloud service equipment 200 may find content items related with the search term sent by the terminal device 100 and send the found content items to the terminal device 100. The terminal device 100 may output content items received as a search result for a complete search term in a fixed region of the first search input setting 530. Here, reference numeral 507 indicates that three content items 51, 52 and 53 are found with respect to the complete search term, "Iron man".

Thereafter, the user may generate an input signal for selecting the second content item 52 among the first to third content items 51, 52 and 53 by entering a touch event on the display unit 140. The terminal device 100 may send the input signal to the cloud service equipment 200. The cloud service equipment 200 may provide the terminal device 100 with detailed view information (or metadata) of the second content item 52, playback information thereof, and local information related to a section of the canvas region where the second content item 52 is arranged. When information on the second content item 52 is received from the cloud service equipment 200, the terminal device 100 may output an information screen for the second content item 52 on the display unit 140 in a state indicated by reference numeral 507. That is, the terminal device 100 may output one of a detailed view screen, a playback screen, local screen information related to a section of the canvas region where the second content item 52 is placed.

On the other hand, in a state indicated by reference numeral 507, the third content item 53 may correspond to the first memo item 521 described before. In this case, when the user selects the third content item 53, a screen transition is performed to a section of the canvas region 511 where the first memo item 521 is placed inside the item 53, without display of detailed content information at the bottom as in reference numeral 501. The cloud service equipment 200 or the terminal device 100 may provide visual effects or marks to distinguish the first and third content items 51 and 52 corresponding to a moving image or photograph from the third content item 53. For example, n a state indicated by reference numeral 507, a shortcut mark may be added to the image of the third content item 53.

In FIG. 5, the result of content search is updated in a region of the first search input setting 530 as explained above. However, the present invention is not limited thereto. For example, as shown in FIG. 6, the results of content search may be output as multiple layers of screen in response to input of partial search terms.

Referring to FIG. 6, after connecting to the cloud service equipment 200, the terminal device 100 may receive content search screen data from the cloud service equipment 200 and output a similar content search screen 510 as described earlier (reference numeral 501 in FIG. 5) as indicated by reference numeral 601. When an input signal for a search input setting request is generated, the terminal device 100 may output a first search input setting 530 as an overlay on the content search screen 510 of the display unit 140 as indicated by reference numeral 603. Here, the first search input setting 530 may include a SIP region 531 including at least one key map to enter a search word, and an output region 532 displaying a search word entered in the SIP region 531. The SIP region 531 may include at least one of various key maps such as a QWERTY key map, Dvorak key map, 3*4 key map and 5*4 key map. In a state indicated by reference numeral 603, the content search screen 510 may be provided by the cloud service equipment 200, and the first search input setting 530 may be provided by the terminal device 100. When the user enters a search term "Jeju" through the SIP region 531, the terminal device 100 sends the search term to the cloud service equipment 200. Here, the input search term may be sent to the cloud service equipment 200 in units of a word ("Jeju") or a syllable ("Je" or "ju") according to system design. Upon reception of a search term, the cloud service equipment 200 performs content search using the received search term. That is the cloud service equipment 200 searches for content items containing the word "Jeju" and sends the found content items as a first search result 541 to the terminal device 100. Then, the terminal device 100 may output the first search result 541 in a region of the first search input setting 530 as indicated by reference numeral 603. Here, the first search result 541 may be output in a region of the content search screen 510. In a state indicated by reference numeral 603, only the first search result 541 is shown. Alternatively, if the first search result 541 is output as a first layer of the first search input setting 530, it may be translucently displayed on the content search screen 510.

Thereafter, the user may further enter a search word as indicated by reference numeral 605. For example, the user may add a word "tourism" through the SIP region 531, resulting in a search term "Jeju tourism". The input search term may be output in the output region 532. The terminal device 100 may send the search term "Jeju tourism" to the cloud service equipment 200. The cloud service equipment 200 may search for content items containing the words "Jeju tourism" and send the found content items as a second search result 542 to the terminal device 100. Then, for the search term "Jeju tourism", the terminal device 100 may output the second search result 542 on the first search input setting 530. Here, the second search result 542 may be output as a second layer above the first search result 541. Here, the second search result 542 and the first search result 541 may be displayed in an overlapping manner so that a part of the first search result 541 can be seen.

Thereafter, the user may further enter a search word using the SIP region 531. For example, the user may append the word "photograph" to the existing words "Jeju tourism". The terminal device 100 may output the words "Jeju tourism photograph" in the output region 532 and send the words as a search term to the cloud service equipment 200. The cloud service equipment 200 may search for content items containing the words "Jeju tourism photograph" and send the found content items as a third search result 543 to the terminal device 100. The terminal device 100 may output the third search result 543 on the display unit 140 so that the third search result 543 overlaps in part with the second search result 542 as indicated by reference numeral 607. Partial overlap between the search results 541, 542 and 543 on the display unit 140 enables the user to examine search results in a broader perspective under screen size limitations and to easily switch between search results. For example, by selecting or touching a visible portion of the second search result 542 or first search result 541 in a state indicated by reference numeral 607, the user may perform a screen transition as desired quickly.

In the event that a part of the search term output in the output region 532 is deleted, the terminal device 100 may output the search result in accordance with the remaining search term. For example, when the user deletes a word "photograph" from the search term "Jeju tourism photograph" output in the output region 532, the terminal device 100 may place the second search result 542 at the top layer. When the user deletes words "tourism photograph" from the search term "Jeju tourism photograph", the terminal device 100 may place the first search result 541 at the top layer while maintaining the first to third search results 541, 542 and 543. Alternatively, the terminal device 100 may perform a screen transition to the previous screen in response to the deletion of a word from the search term. For example, while the search term "Jeju tourism photograph" is output in the output region 532, the terminal device 100 displays a screen as indicated by reference numeral 607 where the third search result 543 is stacked on the second search result 542 and the first search result 541; and when words "tourism photograph" are deleted from the search term, the terminal device 100 may display a screen as indicated by reference numeral 603. In such a backward screen transition process, the terminal device 100 does not transmit the remaining search term to the cloud service equipment 200 and may output one of the already processed search results according to user selection or deletion of a word from the search term.

The terminal device 100 may subdivide search input into meaningful parts and send one or more of the parts as a partial or full search term to the cloud service equipment 200. For example, as described earlier, the terminal device 100 may separate search input into meaningful parts such as words, phrases and sentences and send one or more of the parts as a partial search term to the cloud service equipment 200. That is, while the user enters a search term through the SIP region 531, whenever a new word is entered, the terminal device 100 may send a search request to the cloud service equipment 200 and receive and output a corresponding search result.

However, the present invention is not limited thereto. For example, the terminal device 100 may separate search input into syllables and send a syllable as a search term to the cloud service equipment 200. Then, the cloud service equipment 200 may perform content search based on a syllable in real time and send a search result to the terminal device 100. In this case, the search space may be confined to content items registered in the cloud service equipment 200.

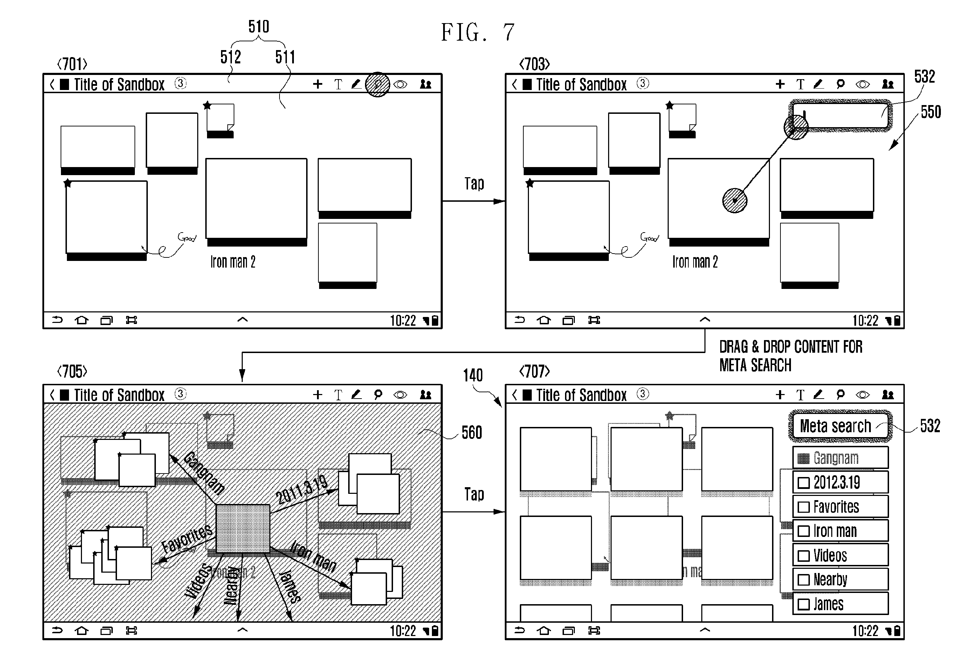

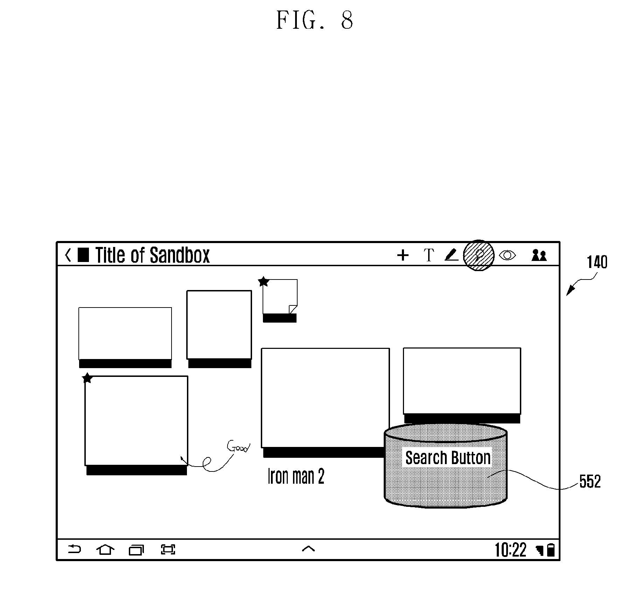

FIG. 7 is screen representations illustrating content search according to a second embodiment of the present invention, and FIG. 8 is screen representations illustrating another content search according to the second embodiment.

Referring to FIG. 7, after connecting to the cloud service equipment 200, the terminal device 100 may output a content search screen 510 as indicated by reference numeral 701. When the user generates an input signal for a second search input setting by selecting an entry for content search in the menu region 512, the terminal device 100 may output a second search input setting 550 on the display unit 140 as indicated by reference numeral 703. Here, the second search input setting 550 may include a content input region 532 to enter a content item for search without use of a SIP region. The content input region 532 may be placed at a particular location of the content search screen 510. Here, the user may select a content item output on the content search screen 510 and move the selected content item to the content input region 532.

Then, the terminal device 100 may obtain metadata of the content item in the content input region 532 and send the obtained metadata as a search term to the cloud service equipment 200. Alternatively, the terminal device 100 may send only index information of the content item in the content input region 532 to the cloud service equipment 200. When metadata is received as a search term, the cloud service equipment 200 may search for content items related to the metadata. When only index information of a content item is received, the cloud service equipment 200 may obtain metadata of the content item and search for content items related to the metadata. The cloud service equipment 200 may send the corresponding search result to the terminal device 100.

Then, the terminal device 100 may output a metadata-based content search screen 560, corresponding to a result of a search based on metadata of a given content item, on the display unit 140 as indicated by reference numeral 705. Here, for example, the content item moved to the content input region 532 is placed at a central region of the screen; clusters of found content items are placed at other regions of the screen; and metadata descriptions may be placed along association lines between the central content item and the clusters. To indicate a metadata-based search state, a textual indicator such as "Meta Search" may be output in the content input region 532. Instead of association lines, metadata descriptions may be presented as titles placed close to regions where the corresponding clusters of found content items are placed. That is, the metadata-based content search screen 560 may include a region where the selected content item is placed, regions where clusters of content items found by a search based on metadata of the selected content item are placed, and metadata descriptions depicting associations between the selected content item and the clusters of found content items.

When the user selects a metadata description or cluster region on the metadata-based content search screen 560, the terminal device 100 may output corresponding results in a thumbnail view or list view format. For example, as indicated by reference numeral 707, the terminal device 100 may output a list of metadata descriptions below the content input region 532 (in a list view format); and when a metadata description is selected by the user, the terminal device 100 may output a corresponding cluster of found content items in a thumbnail view format, for example, on the left side of the screen.

In the above description, metadata of a content item moved to the content input region 532 may include filename, title, media type, file extension, registration date and time, creation date and time, creation location, terminal location at the time of registration, coordinates on the canvas region 511, user preferences, owner, physical properties such as file size, thumbnail size, storage and folder, and tags created by the user. The metadata may further include type-specific information (for example, face tagging information for a photograph). Various examples of metadata are illustrated in Table 1.

**[Table 1]**

| No | Content type | Metadata |
|---|---|---|
| 1 | image | Title, shooting date/time, location, face tagging |
| 2 | picture | EXIF data |
| 3 | recorded audio | Title, description, play time, recorded time |
| 4 | recorded video | Title, description, shooting date, play time, location |
| 5 | music-track | Album art/title/tracks/biography/discography/review /credits/others |
| 6 | music-album | |
| 7 | music-playlist | Playlist name, number of songs, creation date, owner |
| 8 | music hub content | Music track or album description, album art, artist, genre, homepage, movie clip |
| 9 | video hub content | Release year, class, running time, file size, supported device, genre, actors, directors, introduction, URL address for purchase |
| 10 | Web clip | Thumbnail image, title, URL address, hyperlink, video clip |
| 11 | vCard | name, nickname, address, phone number, mail address, relation, SNS ID, homepage, company, duty, department, birthday, photo ID |
| 12 | vCalendar | Schedule title, date and time, attendee, location |
| 13 | Memo | Memo title, writer, creation time, location, related meeting (schedule), shared records |
| 14 | Quote from e-book | Thumbnail image, title, URL address, hyperlink |
| 15 | readers hub content | Author, book title, publication date, purchase date, overview, contents, bookmark record, price, seller |
| 16 | Location | Captured map image, POI related information |
| 17 | Application | Title, review, description, price, URL |

In the above description, the content input region 532 is presented as a bar shape at the upper right corner of the content search screen 510. However, the present invention is not limited thereto. That is, the content input region 532 may be presented as an image of a given shape as shown in FIG. 8 or other shapes. In FIG. 8, the user may conduct metadata-based search using the content input region 552. For example, the user may select and control the content input region 552 so that the content input region 552 overlaps with a specific content item. When the content input region 552 and the content item are brought within a threshold distance or overlap in part, the terminal device 100 may initiate content search based on metadata of the content item.

As described hereinabove, according to the present invention, the content search method and system based on a cloud service, and the terminal device supporting the same enable users to easily and rapidly search for the desired content in a cloud service environment in which a large amount of content is registered.

The terminal device 100 may further include various components according to design. That is, when the terminal device 100 is a communication terminal, it may further include a short-range communication module for short-range communication, a data communication interface based on wired and wireless communication, an Internet communication module for Internet access, and a digital broadcast receiving module for playing digital broadcasts. With the trend towards digital convergence, it should be apparent to those skilled in the art that the terminal device 100 may further include a unit comparable to the above-described units, and one unit of the terminal device 100 may be removed or replaced with another unit.

The terminal device 100 of the present invention may be any information and communication appliance, duplex systems, or multimedia appliance, such as a mobile communication terminal based on communication protocols supporting various communication systems, a portable multimedia player (PMP), a digital broadcast receiver, a personal digital assistant (PDA), a music player like an MP3 player, a portable game console, a smartphone, a laptop computer, or a handheld computer.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Hereinabove, exemplary embodiments of the present invention have been described with reference to the accompanying drawings. Specific terms or words used in the description should be construed in accordance with the spirit of the present invention without limiting the subject matter thereof. It should be understood that many variations and modifications of the basic inventive concept described herein will still fall within the spirit and scope of the present invention as defined in the appended claims.

## Claims

1. A content search system based on a cloud service, comprising:
a cloud service equipment storing at least one content item; and
at least one terminal, in communication with the cloud service equipment, displaying a content search screen received from the cloud service equipment, transmitting a search request, via the received content search screen, to the cloud service equipment, and, in response, outputting a corresponding search outcome received therefrom in a predefined format.

2. The content search system of claim 1, wherein the terminal displays a plurality of search result screen according to each textual search term.

3. The content search system of claim 1, wherein the terminal obtains, when a particular content item is selected from the content search screen, metadata or index information of the selected content item and transmits the metadata or index information as a search term to the cloud service equipment for retrieval of content items associated with the received metadata or the received index information.

4. The content search system of claim 3, wherein the terminal outputs at least one of: a region to display the selected content item, a region to display at least one cluster of content items retrieved on the basis of the metadata, and a region to display metadata descriptions of the retrieved content items.

5. The content search system of claim 1, wherein the at least one content item comprises at least one memo item displayed on the content search screen.

6. A content search method based on a cloud service, comprising:
establishing a connection by a terminal to a cloud service equipment;
receiving a content search screen supporting a search of stored content items from the cloud service equipment;
transmitting a search term, via the received content search screen, to the cloud service equipment;
receiving a search result corresponding to the search term from the cloud service equipment; and
displaying the search result according to a predefined format.

7. The content search method of claim 6, further comprising at least one of:
displaying the content search screen having a canvas region for displaying images of the content items in different shapes and/or colors for distinction;
displaying a search input setting screen for entering a search term for searching by the cloud service equipment; and
displaying at least one region screen for displaying the search outcome provided by the cloud service equipment.

8. The content search method of claim 6, further comprising displaying, when a particular content item is selected from the displayed search outcome in the terminal, at least one of: a portion of the canvas region, a detailed view screen for the selected content item, and a playback screen for the selected content item.

9. The content search method of claim 6, wherein the search input setting screen displays at least one of:
a search input setting region for entering a textual search term and for initiating, when a specific content item is dragged to the search input setting screen, content search based on metadata of the dragged content item.

10. The content search method of claim 9, wherein the terminal displays a plurality of search result screen according to each textual search term.

11. The content search method of claim 10, wherein the terminal displays one or more search results in different layers corresponding to different search terms composed of a syllable, a word, a phrase or a sentence.

12. The content search method of claim 6, wherein the terminal obtains, when a particular content item is selected from the content search screen,, metadata or index information of the selected content item and transmits the metadata or index information as a search term to the cloud service equipment for retrieval of content items associated with the received metadata or received index information.

13. The content search method of claim 12, wherein the terminal displays at least one of: a region to display the selected content item, a region to display at least one cluster of content items retrieved on the basis of the metadata, and a region to display metadata descriptions of the retrieved content items.

14. The content search method of claim 6, wherein the content items comprise at least one memo item displayed on the content search screen.

15. An apparatus for providing content search based on a cloud service, comprising:
a processor; establishing a connection by a terminal device to a cloud service equipment; and
a memory, coupled to said processor, said memory being configured to allow the processor to:
receive a content search screen supporting a search of stored content items from the cloud service equipment;
transmit a search term, via the received content search screen, to the cloud service equipment and, in response, receive a search result including the content items corresponding to the search term; and
display the search result according to a predefined format.
